(19)

Europäisches Patentamt
European Patent Office
Office européen des brevets

(11) **EP 4 376 399 A1**

(12) **EUROPEAN PATENT APPLICATION**

(43) Date of publication:
**29.05.2024 Bulletin 2024/22**

(21) Application number: **22209246.2**

(22) Date of filing: **24.11.2022**

(51) International Patent Classification (IPC):
**H04N 1/60** (2006.01) **G06N 3/0455** (2023.01)
**G06V 10/56** (2022.01)

(52) Cooperative Patent Classification (CPC):
**H04N 1/60; G06N 3/0455; G06N 3/0464;**
**G06N 3/084; G06N 3/088; G06V 10/56**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **Ge, Song**
**80992 Munich (DE)**

• **Sui, Qingcheng**
**80992 Munich (DE)**
• **Meehan, Joseph**
**80992 Munich (DE)**
• **Busch, Stephen**
**80992 Munich (DE)**

(74) Representative: **MERH-IP Matias Erny Reichl**
**Hoffmann**
**Patentanwälte PartG mbB**
**Paul-Heyse-Strasse 29**
**80336 München (DE)**

Remarks:
Amended claims in accordance with Rule 137(2)
EPC.

(54) **LATENT REPRESENTATION OF COLOR SPACE AND ITS TRANSFORMATION**

(57) A color transformer (900) for transforming a first color space mapping to a second color space mapping, the color transformer comprising one or more processors configured to perform the following steps: (i) transforming (701) the first color space mapping to a latent color space mapping by means of a variational autoencoder; (ii) modifying (702) the latent color space mapping to form a modified latent color space mapping; and (iii) transforming (703) the modified latent color space mapping to the second color space mapping. This can allow for a simpler and more effective color transformation method which can be provided for both traditional and artificial intelligence-based algorithms.

FIG. 1

EP 4 376 399 A1

**Description**

FIELD OF THE INVENTION

This disclosure relates to describing a color transformation between different color spaces, for example using a three-dimensional look-up table.

BACKGROUND

In the field of image enhancement, a three-dimensional look-up table (3D LUT, see for example https://en.wikipedia.org/wiki/3D_lookup table)) is a tool for mapping the color in an original image to a new color space. Because of its high accuracy and high efficiency, it is often used as a color enhancement tool.

However, an accurate 3D LUT requires a lot of sampling. The disadvantage of having a large number of sampling points (for example, more than 17 * 17 * 17 * 3 sampling points) is that it brings a huge workload for both manual color adjustment and artificial intelligence (AI) color adjustment, and it is difficult to adjust a 3D LUT online and in real time based on image content.

The 3D LUT used by a photographer or video color correction specialist can be viewed as a discretized representation of a series of combinations of linear or non-linear color adjustment functions applied to a continuous color space. This means that in the high-dimensional 3D LUT space (for example 17 * 17 * 17 * 3 variables), some low-dimensional color adjustment patterns (for example, brightness, saturation, contrast, hue, white balance adjustments) can exist which are familiar to the end users, such as photographers. These operations can be mapped to a 3D LUT by some linear and/or nonlinear functions.

In the existing research for generating a 3D LUT matching with the content of the images to achieve the purpose of color enhancement, a group of basic 3D LUTs learned from experiences is often combined to form a new 3D LUT under the assumption that all modes are linear. The combined weights of the base 3D LUTs are determined by a convolutional neural network (CNN)-based decision model.

A Variational Autoencoder (VAE) is a regularized autoencoder (AE) based on variational inference (VI). VAE is widely used in pattern recognition, decomposition, decoupling and so on because of its excellent feature extraction and interpretable compression capabilities. Especially in nonlinear modal identification and control, VAE is widely used in complex high-dimensional physical systems because of its good nonlinear function fitting capacity.

In one prior technique, a fixed 3D LUT is generated by discretely sampling the color space. Then all or part of the control points in the 3D LUT are adjusted offline to simulate the color space transformation and the color enhancement operations applied in this color space. However, there are many control points, which results in high labor and computing cost during the adjustment. This adjustment is often offline, which means that the 3D LUT cannot be adapted based on the image content. Furthermore, the control points mutually restrict and influence each other, which may increase the difficulty of maintaining the accuracy of the color transformation.

In another prior method, as described in S. Bianco et al. "Personalized Image Enhancement Using Neural Spline Color Transforms", IEEE Transactions on Image Processing vol. 29 2020, a color curve (1D LUT) is used as the color controlling method. An AI algorithm generates different spline curves by controlling the key points on the color curve. Finally, the spline curves map the RGB values of each pixel to generate a new image. However, the color curves are generally not sufficient to represent the rich color changes used by photographers in the process of color blending, thus the system error is relatively large. In addition, the three RGB channels are associated, and three one-dimensional curves cannot simulate one three-dimensional curve.

In a further prior solution, as described in, for example, H. Zeng et al., "Learning Image-adaptive 3D Lookup Table in High Performance Photo Enhancement in Real-time", IEEE Transactions on Pattern Analysis and Machine Intelligence, vol. 44 Issue 4, 2022, an AI color enhancement method learns how to combine three base 3D LUTs to form a new 3D LUT to match the target to complete the color enhancement process in the image. This overcomes the disadvantage that the previous color curve (1D LUT) does not adequately represent the changes in the color space. A fundamental assumption of this solution is that there exists a linear decomposition of the target 3D LUT. However, the accuracy of the linear decomposition method can be low even when the target 3D LUT is generated by three simple color adjustment operations (brightness, contrast, saturation). This is because many color changes in the RGB color space involves nonlinear operations (e.g. clipping), color space cannot be linearly decomposed, which makes the generalization of such linear models very weak. The linear decomposition method may be seen as using Principal Component Analysis (PCA) decoupling for possible modes in the 3D LUT, and performing decomposition and combination on prominent linear features in the modes. Therefore, although this solution can achieve the purpose of controlling the color changes of the high-dimensional space, the accuracy is not high. This method also needs to pre-store several base 3D LUTs, which is also a constraint of this method.

In a further prior solution, as described in D. Tschumperle et al., "An Efficient 3D Color LUT Compression Algorithm Based on a Multi-Scale Anisotropic Diffusion Scheme", (CAIP 2019), a multiscale anisotropic diffusion model is used for 3D LUT compression. In this work, the 3D LUT is compressed using a mathematical method, which places some key points in the 3D space. By combining all key points, the method can approximate the original 3D LUT. However, the compression ratio, compression precision, and compression cost/time of the multiscale anisotropic diffusion model are relatively low.

It is desirable to develop an improved method for describing a color transformation.

SUMMARY OF THE INVENTION

According to one aspect, there is provided a color transformer for transforming a first color space mapping to a second color space mapping, the color transformer comprising one or more processors configured to perform the following steps: (i) transforming the first color space mapping to a latent color space mapping by means of a variational autoencoder; (ii) modifying the latent color space mapping to form a modified latent color space mapping; and (iii) transforming the modified latent color space mapping to the second color space mapping. This can allow for a simpler and more effective color transformation method which can be provided for both traditional algorithms and AI-based algorithms. A discrete sampling of the color space with new operations applied on this sampling (such as a 3D LUT) can be compressed into latent variables. Then these latent variables can be modified to create new latent variables which can be decoded into the new sampling of the color space and the operations applied on it, which can be formed by a function that can be easily used by both human users and hardware of a mobile device. This can be used to create a new mapping that is generated by a user for their style or liking.

Modifying the latent color space mapping may be performed according to the content of an image input to the color transformer. Transforming the latent color space mapping to the second color space mapping may comprise restoring the modified latent color space mapping to the second color space mapping.

The one or more processors may be configured to: (iv) receive an input image; (v) process the input image to determine the colors therein; and (vi) map the colors of the input image to secondary colors using the second color space mapping and form an output image by rendering the input image according to the secondary colors. This may allow the second color space mapping to be applied to the input image to form an output image.

The one or more processors may be configured to, for an input image: perform steps (iv), (v) in that order; and repeatedly receive commands to modify the latent color space and in response to each such command perform steps (ii), (iii) and (vi) in that order. This may allow a user to select a different color space and re-render the image using the new color space.

The one or more processors may be configured to, for an input image, repeatedly receive commands to recolor the input image and in response to each such command select a color space mapping formed by steps (ii) and (iii) and map the colors of the input image to secondary colors using the selected color space mapping and form an output image by rendering the input image according to the secondary colors. This may allow the image to be recolored in different color spaces.

The color transformer may be configured to analyze the input image and in dependence thereon automatically generate a command to modify the latent color space. This may allow input images input to the color transformer to be modified based on their content.

Step (i) may comprise forming, using the variational autoencoder, a decoder algorithm for decoding the latent color space mapping. Step (iii) may comprise transforming the modified latent color space mapping to the second color space mapping by means of the decoder formed in step (i).

The decoder can be used to decode the latent variables to the 3DLUT it represents. In the training phase of the VAE, the decoder can output a 3DLUT that is similar to the initial 3DLUT that is compressed by the encoder. The pretrained decoder can help to decode the latent variable obtained from a decision model. Therefore, the decoder can output a 3DLUT that can map the colors from the input image to the target image.

The decoder algorithm may be implemented by the variational autoencoder. The variational autoencoder may comprise an encoder for compressing a 3DLUT to a latent variable and a decoder to restore a latent variable to a 3D LUT. This may allow the latent variables to be transformed back into a color space mapping such as a 3D LUT. As each entry in latent variables controls a specific abstract feature present in the 3D LUT, altering the values of these variables will allow to change the effect of the final 3D LUT, thus applying different types of enhancements.

The one or more processors may be configured to perform steps (v) and (vi) separately for each of a plurality of regions of the input image to thereby form an output image according to a plurality of second color space mappings. This may allow different regions of the image to be modified based on their content.

The latent color space may have 30 or fewer effective latent variables. The latent color space can have additional redundant variables. The PCA of the variables may be the same as the effective latent variables. The number of latent variables may be selected to correspond to the complexity of the patterns contained in the color space. It may be selected independently of the number of the sampling. The size of latent variables is smaller than that of the first color space mapping, such as a 3D LUT, which can provide a more efficient way of generating decision strategy for both traditional and AI-based algorithms. For example, a 17*17*17*3 3D LUT can be efficiently represented by 24 latent variables without any perceptual differences. In other examples, there may be a different number of latent variables.

The color transformer may provide a user interface whereby a user can provide commands to modify one or more latent variables of the latent color space. This may allow for a connection between the operations of the color manipulation space (also known as the "action space") known to humans and the latent variable space used by the processor.

Each of the first and second color space mappings may have greater than 15,000 variables. In embodiments of the present invention, 3D LUTs (typically with more than 15,000 control points) are represented by latent variables (of which the number is less than 30). After training on a large dataset of 3D LUT, VAE can obtain the ability of representing high-dimensional 3D LUT in a low-dimensional latent variable space. In general, the color enhancement and color space adjustment operations of image editing made by the users are expressed in the form of 3D LUT, and VAE learns and extracts the basic linear and/or non-linear modality of the color changes, and encodes the basic modality as latent variables. Then, these latent variables can be decoded into a new 3D LUT. In other examples, there may be a different number of latent variables.

Each of the first and second color space mappings may be a three-dimensional look-up table. The use of a 3D LUT as a tool for mapping the color in an original image to a new color space can allow for high accuracy and high efficiency.

According to a further aspect, there is provided a coder generator for generating an encoder and a decoder of a variational autoencoder, the coder generator comprising one or more processors configured to: receive an input color space mapping; transform the input color space mapping to a latent color space mapping by means of a candidate variational autoencoder; transform the latent color space mapping to an output color space mapping by means of the candidate variational autoencoder; and estimate a distance between the input color space mapping and the output color space mapping, and in dependence on that distance vary the candidate variational autoencoder. After training on a large dataset of 3D LUTs, the variational autoencoder can obtain the ability of representing high-dimensional 3D LUTs in a low-dimensional latent variable space.

After training the variational autoencoder, it can be used with a decision model which can receive input images and their corresponding target images as a training set. The decision model can be trained to learn to map from input to target. During inference, the trained decision model can receive an image as input, and generate a latent variable representing a 3DLUT that can map the input image to a potential target. Then the decoder formed during training of the variational autoencoder can decode the latent variable generated by the decision model to the 3DLUT.

The latent color space for this aspect may have 30 or fewer latent variables. The size of latent variables may advantageously be far smaller than that of the first color space mapping, which can provide a more efficient way of generating decision strategy for both traditional and AI-based algorithms.

The input color space mapping may have more than 15,000 variables. As described above, the generation and calibration of the first color space mapping, such as a 3D LUT, itself may be labor-intensive and computationally costly, thus 3D LUTs cannot be easily adjusted in real time based on the image content. The transformation of the first color space mapping to a latent color space mapping by means of a variational autoencoder and formation of a modified latent color space mapping that is transformed to the second color space mapping can reduce computational labor and cost. In other examples, there may be a different number of latent variables.

According to a further aspect, there is provided a computer-readable storage medium having stored thereon computer-readable instructions that, when executed at a computer system located at the apparatus, cause the computer system to perform the steps set out above. The computer system may comprise the one or more processors. The computer-readable storage medium may be a non-transitory computer-readable storage medium.

BRIEF DESCRIPTION OF THE FIGURES

The present disclosure will now be described by way of example with reference to the accompanying drawings. In the drawings:

Figure 1 schematically illustrates an example of a VAE training stage.
Figures 2A and 2B show visualizations of several basic methods of color changes (brightness, contrast, saturation) existing in 3D LUT in three-dimensional latent space by using VAE (Figure 2A) and in three-dimensional principle component space by using PCA (Figure 2B) respectively.
Figure 3 schematically illustrates a first exemplary embodiment of the present invention for AI color enhancement.
Figure 4 schematically illustrates a second exemplary embodiment of the present invention.
Figure 5 schematically illustrates further implementation details of the second exemplary embodiment of the present invention described with reference to Figure 4.
Figure 6 schematically illustrates a third exemplary embodiment of the present invention.

Figure 7 shows a flow chart of the steps of a method for transforming a first color space mapping to a second color space mapping.

Figure 8 shows a flow chart of the steps of a method for generating an encoder and a decoder of a variational autoencoder during training for use in the present approach.

Figures 9A and 9B show examples of devices for implementation of embodiments of the present invention and some of their associated components.

DETAILED DESCRIPTION OF THE INVENTION

As described herein, embodiments of the present invention use latent variables to compress and encode a color space and its changes. These latent variables can also be decoded into discrete samples (for example, a 3D LUT) of the color space.

A color space describes a range of possible colors and luminance values. One basic function of a color space is to describe the capabilities of a device for capturing or displaying an image to reproduce color information.

The embodiments described herein use the VAE technique to compress a discrete sampling of the color space and the operations applied on this sampling (such as a 3D LUT) into latent variables. Then these latent variables can be controlled by either traditional methods (such as slide bars, manual tuning) or AI-based methods to create new latent variables that meet the users' requirements regarding either improving the image quality or other metrics of the images. Then, these new latent variables can be decoded into the new sampling of the color space and the operations applied on it, which can be formed by a function that can be easily used by both human users and hardware of a mobile device. This can be used to create a new 3D LUT that is generated by a user for their style or liking.

Traditionally, when photographer edits a raw image captured by an imaging device such as a camera, they can transform the initial raw colors based on the image content, color distribution and personal preferences. The decision of the enhancement actions can be made by, for example, a human or an AI-based model. The original colors captured by the device can be transformed into new colors that are more perceptually accurate and visually pleasing.

The transformation of a color space can be described using a 3D LUT, which as mentioned above is a color grid that uses indexing colors to obtain target colors (i.e. a lattice of output color indexed by input color). A 3D LUT can be seen as a discrete sampling of the color space and the operations applied on it. To calibrate the colors in the 3D LUT, all or parts of the control points can be adjusted. The color adjustment by the 3D LUT can approximate the continuous transformation of the color space created by the color operations (for example, brightness, saturation, contrast, hue, white balance, etc.). A 3DLUT can conveniently transform the initial raw colors based on the image content, color distribution and personal preferences.

In the methods described herein, latent variables (for example, less than 30 latent variables) can be used to represent a 3D LUT (which may have, for example, more than 15,000 control points). These latent variables can be obtained with a VAE trained on a large dataset of enhancement 3D LUTs. Complex image enhancement actions expressed by a 3D LUT can be learned by the VAE and output as latent variables. Therefore, VAE can be used to identify the basic pattern of color transformation in a high-dimensional color space. Then, the VAE compresses and represents these color transformations by latent variables. The number of latent variables is much smaller than that of the sampling points in the discrete sampling (3D LUT) of the color space.

At the same time, the adjustment of latent variables can restore the process of color adjustment and generate a brand-new color adjustment function based on the decision models.

A VAE-generated encoder generates the latent variables which represent high-level abstractions of color space transformation created by professional video or photo editing. As the size of latent variables can be smaller than that of a 3D LUT, this can provide a more efficient way of generating decision strategy for both traditional and AI-based algorithms.

A VAE-generated decoder can then transform the latent variables back into a 3D LUT. As each entry in latent variables controls a specific abstract feature present in the 3D LUT, altering the values of these variables can allow to change the effect of the final 3D LUT, thus applying different types of enhancements. Note that the interpretable features in 3D LUTs are learnt by the VAE in an unsupervised way. This feature disentanglement capability is the foundation for an artificial intelligence algorithm to reason and react as a human does. This can allow for image adaptive 3D LUT generation.

Once the VAE comprising the encoder and decoder has been trained, a decision model can be connected with the pre-trained decoder. The decision model can take downscaled images as input and output latent variables which can be input to the decoder. The decision model can be trained in a supervised way and provides the alteration to latent variables that, when processed by the decoder, will generate a 3D LUT that imitates the actions of a professional photo editing expert.

The VAE can therefore extract patterns in a 3DLUT and compress the 3DLUT into latent variables. Instead of directly controlling a 3DLUT, which may contain many control points, one can control the latent variable for color enhancement. This stage can be considered a first training stage. After the VAE has been trained to obtain the latent variables and the encoder and decoder structure, this can be used in conjunction with a decision model, which can analyze the content of an image, and make decisions to generate a latent variable that represents the 3DLUT which maps the colors transforming the input image to the target image. The decoder obtained by training the VAE can restore this latent variable into a 3DLUT, which can be applied to an input image in order to obtain an output image as close to the target image as possible.

Therefore, two training stages may be used. In the first training stage, the VAE is trained, which can be performed using 3DLUTs as the training dataset. The second training stage can comprise a joint training of the decision model and the decoder using input and target images pairs as the training dataset.

After training on a large dataset of 3D LUTs, VAE can obtain the ability of representing high-dimensional 3D LUT in a low-dimensional latent variable space. In general, the color enhancement and color space adjustment operations of image editing made by the users are expressed in the form of 3D LUT, and VAE learns and extracts the basic linear and/or non-linear modality of the color changes, and encodes the basic modality as latent variables, then these latent variables can be decoded into a new 3D LUT.

Thus, generating the new color space mapping generally comprises the following steps: (i) transforming the first color space mapping to a latent color space mapping by means of a variational autoencoder; (ii) modifying the latent color space mapping to form a modified latent color space mapping (which may be performed by means of a decision model); and (iii) transforming the modified latent color space mapping to the second color space mapping.

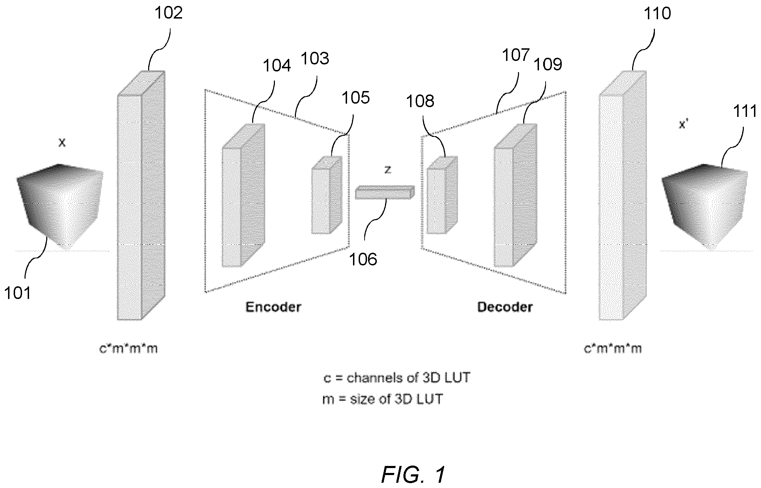

As shown in Figure 1, an encoder 103 can be generated to compresses a tensor 102 derived from a 3D LUT x, 101, into latent variable z, 106, while a decoder 107 can be generated to restore the latent variable 106 to tensor 110 and corresponding 3D LUT x', 111. The VAE can be trained to form the latent variable z such that the 3D LUT x' is as close as possible to the 3DLUT x within set constraints. In this example, the encoder 103 and the decoder 107 comprise convolutional blocks 104, 105 and 108 109 respectively. However, the encoder and the decoder may have any suitable form.

The size of the latent variable z, 106 is less than the size of the discrete sampling in the color space 101. Therefore, a simpler and more effective color transformation method can be provided for both traditional algorithms and AI-based algorithms.

The compression of the color space and its transformation performed by VAE can generally be divided into two parts: a training stage and an inference stage. In one implementation, during the forward propagation of the training stage, the VAE encoder outputs two variables: $\mu$ (the mean value of the input color distribution) and $\log(\sigma)$ (the logarithm standard deviation of the input color distribution). The latent variable z is then generated by random sampling of Gaussian distributions parameterized by the mean $\mu$ and the standard deviation $\sigma$. The VAE decoder 107 then restores the latent variable to the generated data which attempts to mimic the original data. The difference between the generated data and the original data can be measured to improve the quality of the network. The entire model can be trained in an offline and unsupervised manner.

VAE is therefore used to compress the color transformation operations in the color space 101 so that the same information can be represented with fewer parameters. This helps to solve the curse of the dimensionality and to simplify the color adjustment processes achieved by either traditional or AI-based methods. For example, a 3D LUT with 17*17*17*3 control points can be effectively compressed into a size of 24 latent variables by using very few convolutional layers and/or linear layers. The decoded 3D LUT and the original 3D LUT have very little differences in visual perception. In certain embodiments, if the dimension of the latent space is reduced to a value less than a certain level, the color space reconstructed by VAE may be degraded, and the color changes represented by it may be less accurate. However, the dimension of the latent variables required by VAE is far less than the quantity of control points in the reference 3D LUT.

VAE can be constructed by using fully connected layers or convolutional layers. The architecture used may depend on the number of sampling points in the color space. For example, for a 3D LUT with 5*5*5*3 control points, a multi-layer perceptron structure may be used. However, for a 3D LUT having 17*17*17*3 control points, in order to use fewer parameters in the training phase, a 3D convolutional neural network may be used. Then, in the inference stage, the trained decoder structure can be used to restore the color transformation from the latent variables, to create a new color space that can meet the data distribution feature of the training set.

The color space and the enhancement operations applied on an image can be approximated by performing an interpolation on a 3D LUT.

In one example, suppose that the whole dataset of 3D LUT $\{x_i\}$ follows some distribution $p(x)$ in high dimension. This distribution is generated based on some ground truth generative factors $\{a_j\}$ (the actions done for enhancing images), which follows the distribution $p(a)$. The 3D LUT x can be generated by color transformation functions given the actions $\{a_j\}$. This generation process can be described by the deterministic function $x = r(a_j)$. However, this generation process is complicated, so it is desirable to use low-dimensional latent variable z as the substitute of the action variable a to generate high-dimensional x that follows $p(x)$.

The goal is to obtain the encoder and decoder, or in probabilistic world, the likelihood distribution $p(x|z)$ for encoder and the posterior distribution $p(z|x)$ for decoder. Suppose that the latent variable z follows some prior distribution

$p(z)$ and the 3D LUT x can be generated/decoded from the conditional likelihood distribution $p(x|z)$. This can be formulated as a Bayesian inference problem:

$$p(z|x) = \frac{p(x|z)p(z)}{p(x)} = \frac{p(x|z)p(z)}{\int p(x,z\prime)dz\prime} = \frac{p(x|z)p(z)}{\int p\left(x\middle|z'\right)p(z\prime)dz\prime} \qquad (1)$$

For the decoder part, it would be difficult to compute the posterior probability $p(z|x)$ based on Bayesian theorem, because the calculation of $p(x)$ becomes intractable in high dimension space.

As an alternative to get the exact $p(z|x)$ based on Bayesian theorem, one can use a parametrized distribution to approximate the Bayesian properties to get the ideal posterior possesses through optimization. This method is called the variational inference (VI) method, which is one of the most commonly used methods in Bayesian inference problems.

To find the approximation of $p(z|x)$, a parametrized approximate probability distribution $q(z|x)$ can be used. It should belong to a simpler family of distribution which makes this problem tractable; and a way of measuring the "closeness" between $p(z|x)$ and $q(z|x)$ (a loss function to minimize).

With the parameters of $q(z|x)$ as the arguments and the "closeness" as the objective, this problem is now converted to an optimization problem, which can be solved by using numerical methods.

For the argument part, in order to have simplicity for the calculation, some assumptions on the distribution are made. It is assumed that the prior distribution of the latent variable $p(z)$ and the conditional distribution $p(x|z)$ both follow an independent Gaussian distribution:

$$p(z) \equiv \mathcal{N}(0, I) \qquad (2)$$

$$p(x|z) \equiv \mathcal{N}(f(z), cI) \qquad (3)$$

It is also assumed that $q(z|x)$ follows a Gaussian distribution:

$$q(z|x) \equiv \mathcal{N}(g(x), h(x)) \qquad (4)$$

For the objective part, Kullback-Leibler divergence (KLD), which is a type of statistical distance that measures the difference between $p(z|x)$ and $q(z|x)$, can be used to measure the "closeness" between $q(z|x)$ and $p(z|x)$. KLD between a distribution Q and a distribution P is given by:

$$KL(Q, P) = \mathbb{E}_Q[\ln(\frac{P}{Q})] \qquad (5)$$

The optimal f*, g* and h* function lie in their functional space f∈F, g∈G, h∈H. By assuming that F, G, H belongs to the neural network categories, the deep neural network can be used for modeling f, g, and h. In this way, a VAE neural network structure and training scheme is formulated.

The objective can be derived as follows:

$$
\begin{aligned}
(f^*, g^*, h^*) \quad &= \arg\min KL\big(q(z|x), p(z|x)\big) \\
&= \arg\min \left( \mathbb{E}_{z \sim q(Z|x)}\big[\log(q(z|x))\big] - \mathbb{E}_{z \sim q(Z|x)}\left[\log\left[\frac{p(x|z)p(z)}{p(x)}\right]\right] \right) \\
&= \arg\min(\mathbb{E}_{z \sim q(Z|x)}[\log(q(z|x))] - \mathbb{E}_{z \sim q(Z|x)}[\log(p(x|z)] - \mathbb{E}_{z \sim q(Z|x)}[\log(p(z)] \\
&\qquad + \mathbb{E}_{z \sim q(Z|x)}[p(x)]) \\
&= \arg\max(\mathbb{E}_{z \sim q(Z|x)}[\log(p(x|z))] - KL(q(z|x), p(z)) \\
&= \arg\max \left( \mathbb{E}_{z \sim q(Z|x)}[\|x - f(z)\|^2] - KL\big(q(z|x), p(z)\big) \right) \qquad (6)
\end{aligned}
$$

For a further detailed mathematical derivation, see Kingma, D. P., & Welling, M., "Auto-encoding Variational Bayes"(2013), https://arxiv.org/abs/1312.6114).

The first term indicates that a parameterized probability distribution $q(z|x)$ is used to sample $z$ from a data distribution of $x$ in such a way that the x recovered by the conditional probability distribution $p(x|z)$ is as close as possible to the original value $x$. Therefore, the first term indicates a capability of effectively compressing data $x$ to $z$. The second term indicates that the sample $z$ obtained from the posterior distribution of $x$ should be as close as possible to the prior distribution of $z$ (generally a standard Gaussian distribution), that is, each element of the latent variable controls an independent pattern in $x$. The second term represents a decoupling capability for entangled phenomena in high dimensional spaces.

In a more general case, the weight on the second term can be adjusted by β:

$$\max(\mathbb{E}_{z \sim q(Z|x)}\left[log\big(p(x|z)\big)\right] - \beta KL\big(q(z|x), p(z)\big)) \qquad (7)$$

β is a hyperparameter that is used to adjust the balance between the decoupling capability and the compression precision.

The trained VAE model can discover color transformations that conform the mathematical and physical principles of color space.

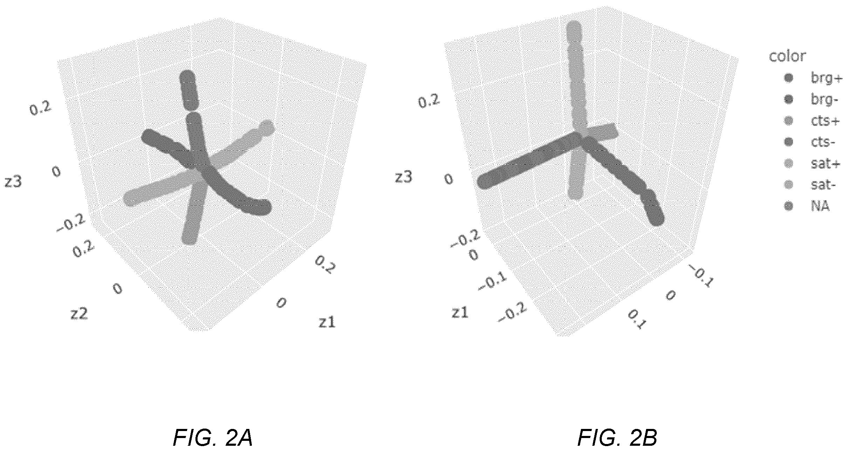

Figures 2A and 2B show a visualization of several basic methods of color changes, namely brightness (brg), contrast (cts) and saturation (sat), existing in 3D LUT in three-dimensional latent space by using VAE, and in three-dimensional principle component space by using PCA respectively. The trained VAE model (Figure 2A) can discover color transformations that conform the mathematical and physical principles of color space. The VAE model can independently discover some color transformation operations defined by a human, such as brightness and contrast modification, without supervision. In addition, three-dimensional projections of these transformation operations may comply with a physical law of the color operations (the brightness plane, the saturation plane, and the hue plane are perpendicular to each other, the increasing/decreasing of brightness and saturation are linearly changed, and the changes of hue are hyperbolic). In contrast, the PCA decomposition (Figure 2B) does not have this property.

Some exemplary embodiments of the present invention having specific applications will now be described.

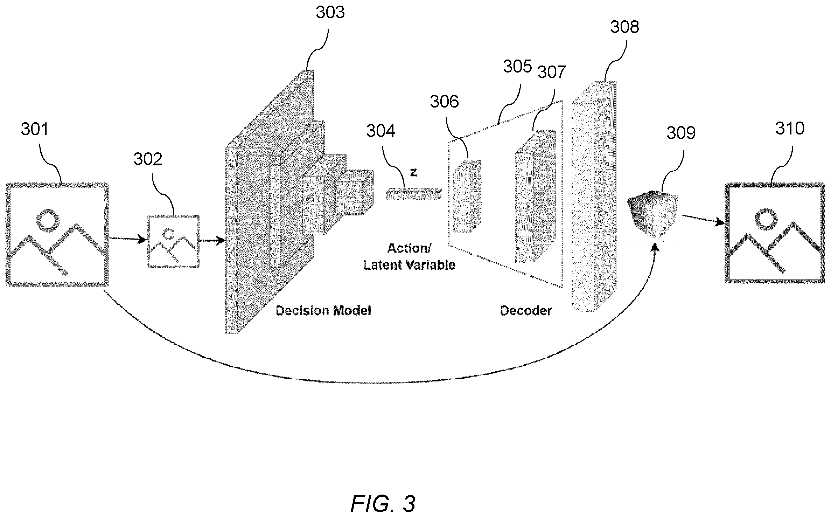

Figure 3 shows an exemplary embodiment of the present invention for the application of AI color enhancement.

An input image 301 is downscaled to form a down-scaled image 302 in a first color space. For example, a 256 * 256 image may be formed by downscaling a 4K image. The downscaled image 301 is passed to the decision model, which may be a traditional algorithm or an AI-based model. The decision model outputs latent variables which represent the retouching functions based on the features it has extracted from the image. In this example, the decision model is an AI decision model. The downscaled image 302 is processed by the AI decision model 303.

Based on high-order features extracted from images (for example, semantic features, color histogram features, etc.), the decision model 303 outputs latent variables z, indicated at 304, that cause specific changes in image color. The latent variables 304 are then passed to a pre-trained VAE decoder 305. The VAE decoder 305 in this example comprises multiple linear layers 306, 307. The decoder 305 generates the corresponding decoded tensor 308 The 3D LUT 309 in the second color space can then be applied to the full resolution image/video 301 (for example, images or videos having 4K resolution) to give an output 310.

In traditional approaches, professional photo editors can decide the image enhancement actions (for example, add saturation by 0.05, adjust the tone curve, etc.) based on the scene content (such as indoor/outdoor, portrait, foliage, sky) and color distribution (such as under/over-saturated) they have seen in the image. The decision model used in the approach described herein is used to record or imitate the behaviors of professional photo editors.

In some implementations, the decision model can be led by human users. For example, a user interface with slide bars can be provided. The slide bars may contain combinations of basic image enhancement actions such as +- saturation, +- contrast, +- brightness, etc. The latent variable of the unit quantity of each action can be combined with certain weights for calculating the final latent variable which corresponds to the final retouching function.

The decision model can also be led by an AI-based algorithm. In this case, the model extracts abstract features from the images (for example, chromatic features, illumination features, semantic features, etc.). The model then decides the actions to apply to the image and converts the retouching functions into latent variables.

Since the physical and mathematical characteristics of the latent variable correspond to those of the human visual perception, the latent variables have a good capability of representing the actions.

As described above, the latent variable is then passed to the pretrained 3D LUT decoder, which interpret the latent representation and generate a 3D LUT. The 3D LUT is applied on the full-scale image/video (for example, with 4K resolution).

Based on experiments, the inventors found that the average color difference $\Delta E_{00}$ between the enhanced images generated by the AI 3D LUT of this embodiment and the reference images enhanced by the experts is less than 7, which is very small. This indicates that AI decision models can effectively mimic photographers' decision-making processes to achieve similar retouching styles.

A decoder using the exemplary structure shown in Figure 3 would require approximately 4 giga floating point operations per second (GFLOPS) to generate 60 3D LUTs (with grid size 17 * 17 * 17 * 3) for 60 frames of images in 1 second (4k 60 frames per second videos).

Differently to an existing pixel-level mapping method (for example, DeepUPE), this embodiment is more intuitive for color adjustment by a human. It can be combined with existing software and hardware, and can be implemented with smaller time and space complexity. In addition, because of the separation of the functions of the decision model and the 3D LUT decoder (retouching function), the two parts of the design can be optimized separately according to their functions, which simplifies the optimization process of the overall performance of the color enhancement algorithm framework.

Compared with prior color curve methods, the 3D LUT generated by decoder in the embodiment described with reference to Figure 3 has higher accuracy and disentanglement capability. This method is also more accurate in representing nonlinear retouching equations than the technique of combining base 3D LUTs with weights learnt by an AI decision model.

Compared with external software such as Adobe Lightroom, the structure of the decoder can be a neural network. The gradients of the neural network can be propagated from the loss function through the decoder to the parameters of the decision model, and the entire retouching process can be derived, allowing to adopt gradient-based reinforcement learning methods that are more stable and easier to train. The present approach can thus avoid the additional problems caused by the use of non-differentiable color transformation operations, and can enable the automatic color enhancement algorithm to have better convergence and more stable performance.

The use of this embodiment for AI color enhancement can reduce the amount of computation compared to the prior art. For the color optimization model of a video, the transition of the 3D LUT between each frame can be achieved by interpolation of latent variables. This means that computationally expensive AI decision models do not have to be run on every frame in order to achieve smooth color-enhanced policy transitions.

Generally, compared with prior techniques, the present approach can independently discover a non-linear color transformation function in a three-dimensional color space, and the decision model can well-control the latent variables in order to generate the color retouching function, so that accurate AI color enhancement can be implemented.

The embodiment illustrated in Figure 3 is a black box model of color transformation in latent space. The manner in which a latent variable encodes a color transformation is usually inconsistent with a familiar color operation variable (such as increasing/decreasing luminance, etc.).

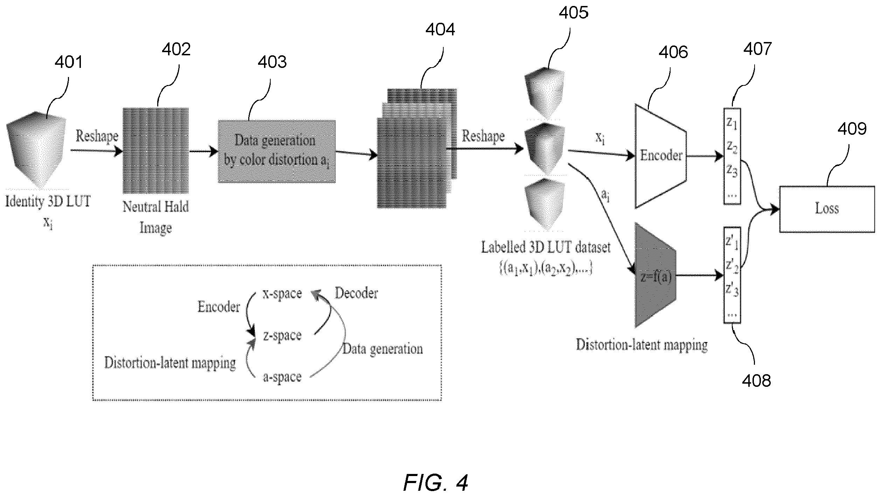

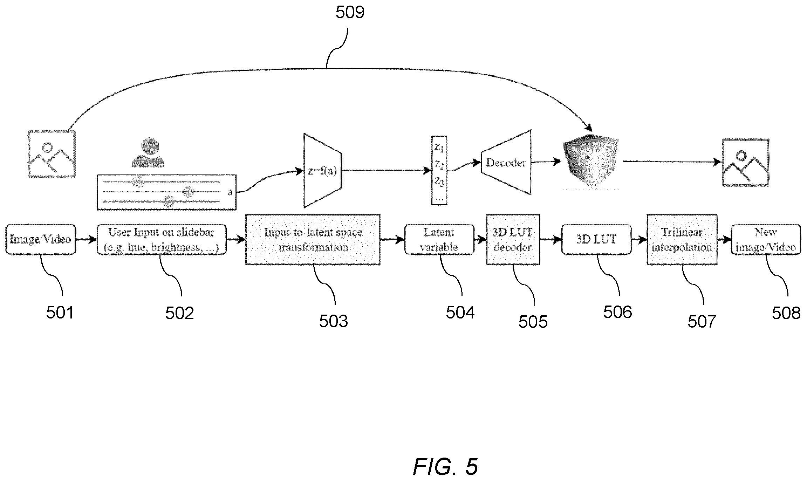

A further exemplary embodiment illustrated in Figures 4 and 5 creates a connection between the operations of the color manipulation space known to humans, referred to as the color operation action space, and the latent variable space used by the computing device.

According to experiments performed by the inventors, the learned representation of color changes in low-dimensional latent space is a re-coding of the color adjustment operations represented in 3D LUTs (for example, variables of brightness, contrast, saturation, white balance). After training the VAE, the system has the ability of transforming between 3D LUT spaces (x-space) and latent spaces (z-space).

In addition, a 3D LUT can be generated by given color enhancement operations, so there is also the ability to convert from the color operation action space (a-space) to the 3D LUT space (x-space), then to the latent space (z-space).

In this embodiment, the corresponding 3D LUT may be indirectly obtained by constructing a mapping from the color operation action space (a-space) to the latent space (z-space) by using the training method shown in Figure 4.

The space of the identity 3D LUT $x$, 401, as discussed above, is referred to as x-space. In this example, the 3D LUT undergoes a reshape operation to form a neutral Hald Image 402, which can be used to visualize the full RGB color space distortion. The image 402 can then undergo color distortion in the action space, as shown at 403, to give image enhancement action $a_i$ in the action space. The resulting Hald Images 404 undergo a further reshape operation.

The number of latent variables strongly depends on the dimensionality of the action space, and rarely depends on the density of the 3DLUT. To determine the relation between latent variables in the latent space and image enhancement actions in the action space, the VAE can be trained using labelled 3D LUTs, shown at 405 (for example, saturation +- 0.1, saturation +-0.2, ..., brightness +- 0.1, brightness +- 0.2, ..., contrast +- 0.1, contrast +- 0.2, ...). Then, it can be observed which labels activate which latent variables and how much, thus observing the relation between the actions and latent variables.

The loss 409 between the latent variables $z_i$ 407 output by the encoder 406 and the values 408, which in this example indicate the real distortion output by distortion functions, can then be determined and used to update the parameters of the model until a predetermined level of convergence is reached. The mapping between the color operation action space to the latent space can therefore be learned.

Thus, during training, the input color space mapping in the form of a 3D LUT is transformed to a latent color space mapping by means of a variational autoencoder. A distance between the input color space mapping and the output color space mapping, and in dependence on that distance vary the variational autoencoder. The same steps can be performed to learn the decoder model for transforming between the latent color space mapping and the output color space mapping.

After the previous learning of the mapping from action $a_i$ to latent variable $z_i$, the mapping function from action space to latent space is created. This can allow users to manually tune the image and modify the decision model. This also provides a way to directly correct the output of the decision model.

As shown in Figure 5, the user can manually adjust the input image or video 501. For example, as shown at 502, the user can provide input on a slide-bar to adjust characteristics such as the hue and brightness, etc. of the input 501. This provides a user interface whereby a user can provide commands to modify one or more latent variables of the latent space.

The latent variables 504 can then be formed based on the user input a (i.e. z is a function of a), as shown at 503. The latent variables 504 are then input to the 3D LUT decoder 505 to output the 3D LUT 506 in the second color space. The 3D LUT 506 is then applied to the input image or video 501, as indicated by the arrow at 509. In this example, a trilinear interpolation operation is performed, as indicated at 507, and the new image or video 508 is output.

With this mapping, z-space can be manipulated indirectly from a-space. Using such a method, this embodiment can obtain a simpler, more structured, and more consistent encoding method for the color operation (variable a) of the images.

In this example, the possibility of manual intervention is added into the machine learning scheme to make the use of the whole model more controllable. The functionality of a user interface is therefore provided whereby a user can provide commands to modify one or more latent variables of the latent color space.

In response to commands from a user, the latent color space mapping can be modified and then transformed to a second color space mapping. The colors of the input image can be mapped to secondary colors using the second color space mapping and an output image can be formed by rendering the input image according to the secondary colors.

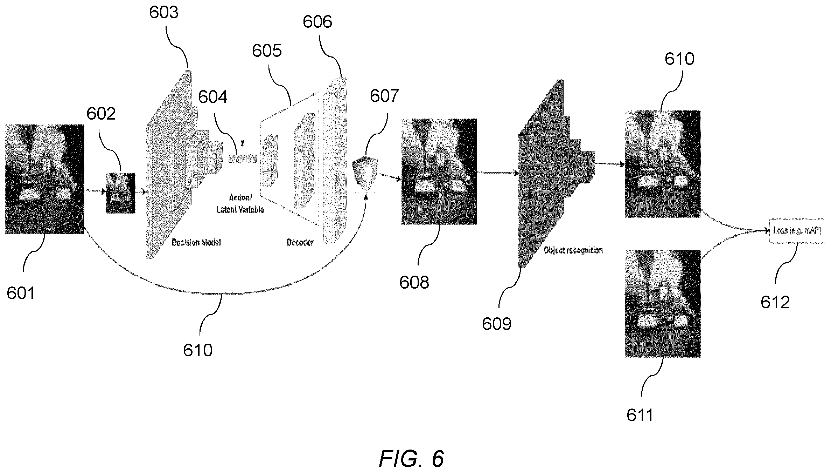

A further exemplary embodiment is illustrated in Figure 6. In this embodiment, the approach is used in an object detection image processing application.

The original image 601 is downscaled to form downscaled image 602. The downscaled image 602 is input to the decision model 603, which outputs the active or latent variable z, 604. The variable 604 is then input to decoder 605 to output tensor 606 and 3D LUT 607. The 3D LUT 607 is applied to the original image 601 in the second color space to form output image 608.

In this embodiment, the output image 608 is input to an object recognition model 609. The output of the object recognition model 609 is the performance of the recognition correction, which can be measured using, for example, the mean average precision (mAP). At 610, the detection precision of the model is determined for the AI 3DLUT output 608, and at 611 the detection precision is determined for the original image 601.

In this example, the loss function 612 compares and improves the detection precision of the model (for example, the mAP) accordingly.

Since an image signal processor's processing of raw images is not designed to produce the most appropriate color adjustment solution of the object detection algorithm, the objective can be changed so that the decision model can make color optimization that is more conducive to improve the accuracy of the object recognition algorithm. Compared to the embodiment described with reference to Figure 3, when the loss function is changed, the starting point of backward gradient propagation on the computation graph is changed as well. It changes from the distance between the output image and the target image to the loss function that generates the object detection accuracy. Compared with the embodiment illustrated in Figure 3, in this embodiment, the optimization objective is modified from image color enhancement for human vision to image color enhancement for computer vision.

Based on experiments, it was found that the color adjustment module with automatic color enhancement can effectively improve the object detection accuracy compared with the previous case with the color adjustment module designed for human vision.

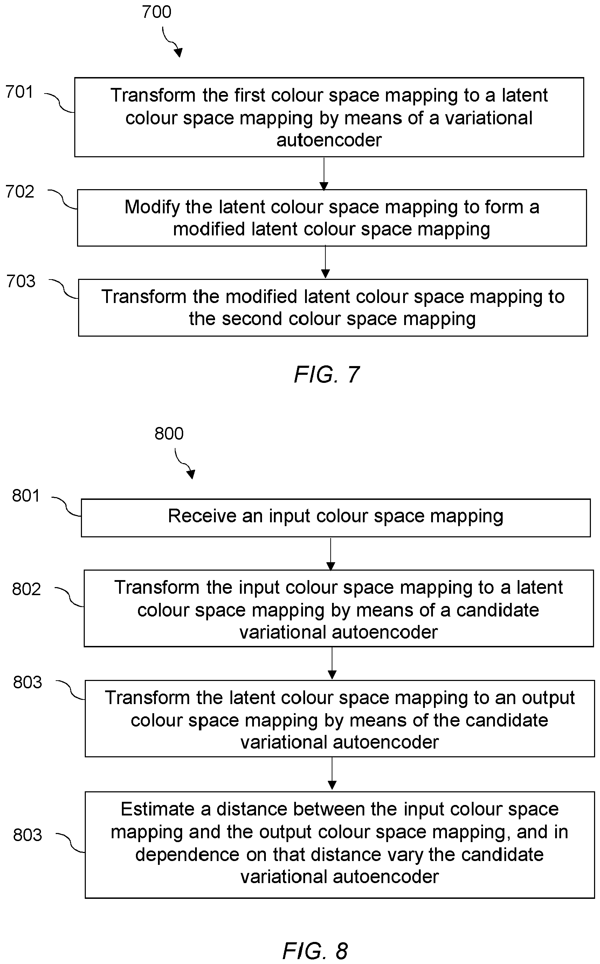

Figure 7 shows the steps of an exemplary method for transforming a first color space mapping to a second color space mapping. At step 701, the method comprises transforming the first color space mapping to a latent color space mapping by means of a variational autoencoder. At step 702, the method comprises modifying the latent color space mapping to form a modified latent color space mapping. At step 703, the method comprises transforming the modified latent color space mapping to the second color space mapping.

Figure 8 shows the steps of an exemplary method for generating an encoder and a decoder of a variational autoencoder. This method can be used to train the variational autoencoder. At step, 801, the method comprises receiving an input color space mapping. At step 802, the method comprises transforming the input color space mapping to a latent color space mapping by means of a candidate variational autoencoder. At step 803, the method comprises transforming the latent color space mapping to an output color space mapping by means of the candidate variational autoencoder. At step 804, the method comprises estimating a distance between the input color space mapping and the output color space mapping, and in dependence on that distance varying the candidate variational autoencoder. This method can be performed during training until the candidate variational autoencoder reaches a predetermined level of convergence. The trained encoder and decoder can then be used in subsequent training phases for the training of the decision model and/or the inference phase.

The VAE can be trained to obtain a latent variable structure and decoder structure. In a second training stage, a decision model to analyze input images and output the latent variable accordingly can be trained, and the pre-trained decoder obtained during training of the VAE can decode the latent variables into a 3DLUT for further enhancement of the input images.

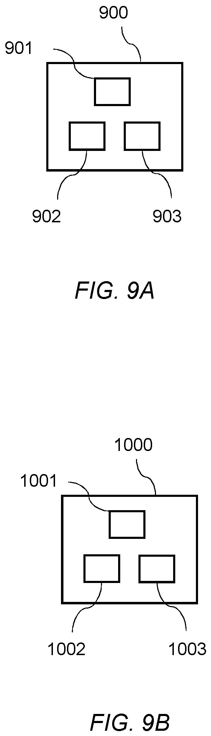

Figures 9A and 9B show examples of devices that can implement the color transformer and coder generator for training the variational autoencoder described herein. The devices 900, 1000 may comprise at least one processor, such as processors 901, 1001 and at least one memory, such as memories 902, 1002. The memory stores in a non-transient way code that is executable by the processor(s) to implement the device in the manner described herein. The devices may also comprise one of more image sensors 903, 1003 configured to capture an image which can then be input to an image signal processing (ISP) pipeline implemented by the processor 901, 1001. In some implementations, the color transformer and the coder generator may be implemented by the same device and the same processor.

As described herein, embodiments of the present invention use latent variables to compress and encode the color space and its changes. These latent variables can be also decoded into discrete samples (for example a 3D LUT) of the color space, which can then be applied to an input image to transform the colors in the input image to secondary colors.

An input image can be processed to determine the colors in the input image, which can then be mapped to secondary colors using the decoded 3D LUT. The colors of the input image can be mapped to secondary colors using the second color space mapping and an output image can be formed by rendering the input image according to the secondary colors. This can be performed for each of a plurality of regions in the input image to form an output image according to a plurality of second color space mappings, one for each region. This may be performed repeatedly for a respective input image.

An image enhancement action represented by a 3D LUT can therefore be compressed into a latent variable by using VAE. These latent variables have the advantage of being concise and interpretable. These latent variables are well suited to be used as control variables in decision models that control the color enhancement operations. VAE uses a variational inference approach that allows each latent variable to approximate a particular color change mode in a 3D LUT. This means that complex color change patterns are disentangled, which makes it easier for AI decision models and users to manipulate color changes. The generalization nature of VAE makes it possible to generate 3D LUT instances that are consistent with the distribution of the training dataset. This ensures the decoder to be robust in generating natural 3D LUTs. The decoder is also lightweight and requires low computational resources, and can be used for real-time video editing and image enhancement for an ISP pipeline.

Embodiments of the present invention can also reduce storage. A user device, such as a mobile phone, may store the latent variable of the 3D LUT instead of directly storing the 3D LUT. As a result, users can store a wide variety of 3D LUTs as latent variables, which require small storage space and low communication overhead. In addition, because latent representation of a 3D LUT is much simpler than the 3D LUT itself, the decision model can generate different 3D LUTs for different sub-areas of the image, so that local color enhancement can be implemented more easily. Therefore, a great number of latent variables representing different 3D LUTs can be stored instead of storing 3D LUTs. This allows the user to have a great variety of 3D LUTs choices with small storage space needed. This also solves a problem of local color enhancement, because a 3D LUT can be generated for each separated area.

One reason why 3D LUTs can be decomposed and combined in multi-layer perception (MLP) or convolutional neural network (CNN) mode is that 3D LUTs are similar to images and have structural features. Its dimensions tend to be consistent and can be upsampled or downsampled. Therefore, for similar data, a similar model structure can be used to disentangle and control them. The present approach has a broad ability to develop control laws for system with states in high-dimensional space.

Thus, the framework described herein can be applied to other high-dimensional system control problems. For example, a 3D LUT as a look-up table ($N*D^M$) can be fully applied to a nonlinear mechanic system model with M observations that is often manually operated by N inputs. The optimal solution obtained by using the model predictive control (MPC) model often exists in the form of a multi-input multi-output (MIMO) piece-wise affine solution. Because it is difficult to solve and cannot be run online, a large number of piece-wise affine pre-solved optimal control strategies are stored to reduce the time delay. Similar to the embodiment described with reference to Figure 3, a control variable look-up table can be adaptively generated by discovered the relationship between real environment parameters and latent variables by VAE.

In addition, the results provide a gradient-based supervised reinforcement learning approach other than Q-learning, and are easily interpretable. Therefore, a problem that imitation learning cannot be used in labelled datasets when the label is not directly described, as the agent's action can be transformed into imitation learning. The convergence of reinforcement learning models is also accelerated.

Embodiments of the present invention can be applied in autopilot scenarios for improving the object recognition's accuracy or other computer vision related tasks' performance. They can be applied in portable devices such as mobile phones. Compared with the method of adjusting the entire color space, the calculation workload is relatively small. It can be used to enhance photos or videos taken by users in real time. It can also be applied to real-time color enhancement, pre-rendering of mobile phone photographing, video editing, etc. Therefore, in image stylization, the technique can be used to adjust the style of images and videos to achieve different styles which meet the users' requirements.

Embodiments of the present invention therefore compress the image enhancement actions, which can be expressed by a 3D LUT, then transform them into latent variables. These latent variables are concise, interpretable, and easily adopted as control variables for some decision models that control the generation of image retouching functions needed.

Embodiments of the present invention may allow a color transformation to be accurately described, from a high-dimensional color space in a low-dimensional space. Depending the decision model used, the color transformation generated by adjusting the latent variables can be suitable for human visual perception to improve the visual quality of the images, and can also increase the precision and recall of Computer Vision-related tasks.

The VAE adopts a Variational Inference approach, which induces that each latent variable controls one particular pattern in a 3D LUT. This means that the actions are disentangled and easier for the decision model to manipulate. The generative nature of VAE makes it possible to generate 3D LUT instances that follows the distribution of training dataset. This means that generated 3D LUT by decoder resembles the 3D LUT for training VAE. This ensures great robustness in terms of generating natural color-transformation 3D LUT.

The transition in 3D LUT between each frame can be carried out as interpolation of latent variables instead of interpolating directly 3D LUT. This can also produce perceptually smooth transition in terms of color. This means that the computational-costly decision model doesn't have to be run on each frame. In the video case, where consecutive frames need to have similar 3DLUTs in order to have stable color rendering, the latent variables can be interpolated instead of the LUTs, greatly reducing the computations. Also, it will allow for perceptually smoother transitions in terms of color.

The decoder and 3D LUT are used for color enhancement, which means the backpropagation of gradient can go from loss to parameters of the decision model. This provides an alternative model to non-differentiable operations. As a result, an automatic image enhancer implementing the approach may also have a more stable performance. Furthermore, because of the separation of the decision model and the decoder, the two parts can be developed separately.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

**Claims**

1. A color transformer (900) for transforming a first color space mapping to a second color space mapping, the color transformer comprising one or more processors (901) configured to perform the following steps:

   (i) transforming (701) the first color space mapping to a latent color space mapping by means of a variational autoencoder;
   (ii) modifying (702) the latent color space mapping to form a modified latent color space mapping; and
   (iii) transforming (703) the modified latent color space mapping to the second color space mapping.

2. A color transformer (900) as claimed in claim 1, wherein the one or more processors are configured to:

   (iv) receive an input image;
   (v) process the input image to determine the colors therein; and
   (vi) map the colors of the input image to secondary colors using the second color space mapping and form an output image by rendering the input image according to the secondary colors.

3. A color transformer (900) as claimed in claim 2, wherein the one or more processors are configured to, for an input image:

perform steps (iv), (v) in that order; and
repeatedly receive commands to modify the latent color space and in response to each such command perform steps (ii), (iii) and (vi) in that order.

4.  A color transformer (900) as claimed in claim 2, wherein the one or more processors are configured to, for an input image, repeatedly receive commands to recolor the input image and in response to each such command select a color space mapping formed by steps (ii) and (iii) and map the colors of the input image to secondary colors using the selected color space mapping and form an output image by rendering the input image according to the secondary colors.

5.  A color transformer (900) as claimed in any of claims 2 to 4, wherein the color transformer is configured to analyze the input image and in dependence thereon automatically generate a command to modify the latent color space.

6.  A color transformer (900) as claimed in any preceding claim, wherein step (i) comprises forming, using the variational autoencoder, a decoder algorithm for decoding the latent color space mapping.

7.  A color transformer (900) as claimed in claim 6, wherein step (iii) comprises transforming the modified latent color space mapping to the second color space mapping by means of the decoder formed in step (i).

8.  A color transformer (900) as claimed in any of claims 2 to 7, wherein the one or more processors are configured to perform steps (v) and (vi) separately for each of a plurality of regions of the input image to thereby form an output image according to a plurality of second color space mappings.

9.  A color transformer (900) as claimed in any preceding claim, wherein the latent color space has 30 or fewer effective latent variables.

10. A color transformer (900) as claimed in any preceding claim, wherein the color transformer provides a user interface whereby a user can provide commands to modify one or more latent variables of the latent color space.

11. A color transformer (900) as claimed in any preceding claim, wherein each of the first and second color space mappings has greater than 15,000 variables.

12. A color transformer (900) as claimed in any preceding claim, wherein each of the first and second color space mappings is a three-dimensional look-up table.

13. A coder generator (1000) for generating an encoder and a decoder of a variational autoencoder, the coder generator comprising one or more processors (1001) configured to:

    receive (801) an input color space mapping;
    transform (802) the input color space mapping to a latent color space mapping by means of a candidate variational autoencoder;
    transform (803) the latent color space mapping to an output color space mapping by means of the candidate variational autoencoder; and
    estimate (804) a distance between the input color space mapping and the output color space mapping, and in dependence on that distance vary the candidate variational autoencoder.

14. A coder generator (1000) as claimed in claim 13, wherein the latent color space has 30 or fewer effective latent variables.

15. A coder generator (1000) as claimed in claim 13 or 14, wherein the input color space mapping has more than 15,000 variables.


**Amended claims in accordance with Rule 137(2) EPC.**

1.  A color transformer (900) for transforming a first color space mapping to a second color space mapping, the color transformer comprising one or more processors (901) configured to perform the following steps:

(i) transforming (701) the first color space mapping to a latent color space mapping by means of a variational autoencoder;
(ii) modifying (702) the latent color space mapping to form a modified latent color space mapping; and
(iii) transforming (703) the modified latent color space mapping to the second color space mapping,

wherein the latent color space has 30 or fewer latent variables,
wherein each of the first and second color space mappings has greater than 15,000 variables.

2. A color transformer (900) as claimed in claim 1, wherein the one or more processors are configured to:

(iv) receive an input image;
(v) process the input image to determine the colors therein; and
(vi) map the colors of the input image to secondary colors using the second color space mapping and form an output image by rendering the input image according to the secondary colors.

3. A color transformer (900) as claimed in claim 2, wherein the one or more processors are configured to, for an input image:

perform steps (iv), (v) in that order; and
repeatedly receive commands to modify the latent color space and in response to each such command perform steps (ii), (iii) and (vi) in that order.

4. A color transformer (900) as claimed in claim 2, wherein the one or more processors are configured to, for an input image, repeatedly receive commands to recolor the input image and in response to each such command select a color space mapping formed by steps (ii) and (iii) and map the colors of the input image to secondary colors using the selected color space mapping and form an output image by rendering the input image according to the secondary colors.

5. A color transformer (900) as claimed in any of claims 2 to 4, wherein the color transformer is configured to analyze the input image and in dependence thereon automatically generate a command to modify the latent color space.

6. A color transformer (900) as claimed in any of claims 2 to 5, wherein the one or more processors are configured to perform steps (v) and (vi) separately for each of a plurality of regions of the input image to thereby form an output image according to a plurality of second color space mappings.

7. A color transformer (900) as claimed in any preceding claim, wherein step (i) comprises forming, using the variational autoencoder, a decoder algorithm for decoding the latent color space mapping.

8. A color transformer (900) as claimed in claim 7, wherein step (iii) comprises transforming the modified latent color space mapping to the second color space mapping by means of the decoder formed in step (i).

9. A color transformer (900) as claimed in any preceding claim, wherein the color transformer provides a user interface whereby a user can provide commands to modify one or more latent variables of the latent color space.

10. A color transformer (900) as claimed in any preceding claim, wherein each of the first and second color space mappings is a three-dimensional look-up table.

11. A coder generator (1000) for generating an encoder and a decoder of a variational autoencoder, the coder generator comprising one or more processors (1001) configured to:

receive (801) an input color space mapping;
transform (802) the input color space mapping to a latent color space mapping by means of a candidate variational autoencoder;
transform (803) the latent color space mapping to an output color space mapping by means of the candidate variational autoencoder; and
estimate (804) a distance between the input color space mapping and the output color space mapping, and in dependence on that distance vary the candidate variational autoencoder,
wherein the latent color space has 30 or fewer latent variables,

wherein each of the first and second color space mappings has greater than 15,000 variables.

12. A computer-readable storage medium having stored thereon computer-readable instructions that, when executed at a computer system located at the apparatus, cause the computer system to perform the steps set out in accordance with claims 1 to 10.

13. A computer program product comprising instructions which, when the program is executed by a computer, cause the computer to carry out the steps set out in accordance with claims 1 to 10.

*FIG. 1*

c = channels of 3D LUT
m = size of 3D LUT

FIG. 2A

FIG. 2B

*FIG. 3*

EP 4 376 399 A1

*FIG. 4*

*FIG. 5*

EP 4 376 399 A1

FIG. 6

700

701 — Transform the first colour space mapping to a latent colour space mapping by means of a variational autoencoder

702 — Modify the latent colour space mapping to form a modified latent colour space mapping

703 — Transform the modified latent colour space mapping to the second colour space mapping

*FIG. 7*

800

801 — Receive an input colour space mapping

802 — Transform the input colour space mapping to a latent colour space mapping by means of a candidate variational autoencoder

803 — Transform the latent colour space mapping to an output colour space mapping by means of the candidate variational autoencoder

803 — Estimate a distance between the input colour space mapping and the output colour space mapping, and in dependence on that distance vary the candidate variational autoencoder

*FIG. 8*

FIG. 9A

FIG. 9B

Europäisches Patentamt

European Patent Office

Office européen des brevets

# EUROPEAN SEARCH REPORT

Application Number

EP 22 20 9246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/198718 A1 (WALTERS AUSTIN GRANT [US] ET AL) 23 June 2022 (2022-06-23) | 1,2,5-9, 11,12 | INV. H04N1/60 |
| Y | * paragraph [0006] – paragraph [0033]; figures 1, 2 * | 3,4,10, 13-15 | G06N3/0455 G06V10/56 |
| Y | US 2020/104640 A1 (POOLE BENJAMIN [US] ET AL) 2 April 2020 (2020-04-02) | 3,4, 13-15 | |
| A | * paragraph [0018] – paragraph [0031] * | 1,2,5-12 | |
| Y | US 2022/028139 A1 (MITRA NILOY [GB] ET AL) 27 January 2022 (2022-01-27) | 10 | |
| A | * paragraph [0020] – paragraph [0036]; figure 2 * | 1-9, 11-15 | |
| A | US 2021/150775 A1 (PHOGAT ANKIT [IN] ET AL) 20 May 2021 (2021-05-20) * paragraph [0041] – paragraph [0058]; figure 4 * | 1-15 | |

TECHNICAL FIELDS SEARCHED (IPC)

H04N
G06N
G06V

The present search report has been drawn up for all claims

| Place of search | Date of completion of the search | Examiner |
|---|---|---|
| The Hague | 9 May 2023 | Lauritzen, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**          EP 22 20 9246

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2023

| Patent document cited in search report | | Publication date | Patent family member(s) | | Publication date |
|---|---|---|---|---|---|
| US 2022198718 | A1 | 23-06-2022 | US 2022058835 | A1 | 24-02-2022 |
| | | | US 2022198718 | A1 | 23-06-2022 |
| US 2020104640 | A1 | 02-04-2020 | CN 112789625 | A | 11-05-2021 |
| | | | EP 3834137 | A1 | 16-06-2021 |
| | | | US 2020104640 | A1 | 02-04-2020 |
| | | | US 2020364505 | A1 | 19-11-2020 |
| | | | WO 2020064990 | A1 | 02-04-2020 |
| US 2022028139 | A1 | 27-01-2022 | NONE | | |
| US 2021150775 | A1 | 20-05-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. BIANCO et al.** Personalized Image Enhancement Using Neural Spline Color Transforms. *IEEE Transactions on Image Processing,* 2020, vol. 29
- **H. ZENG et al.** Learning Image-adaptive 3D Lookup Table in High Performance Photo Enhancement in Real-time. *IEEE Transactions on Pattern Analysis and Machine Intelligence,* 2022, vol. 44 (4
- **D. TSCHUMPERLE et al.** An Efficient 3D Color LUT Compression Algorithm Based on a Multi-Scale Anisotropic Diffusion Scheme. *CAIP,* 2019
- **KINGMA, D. P. ; WELLING, M.** *Auto-encoding Variational Bayes,* 2013, https://arxiv.org/abs/1312.6114